# EUROPEAN PATENT APPLICATION

(11) **EP 2 492 518 A1**
(43) Date of publication of application: **29.08.2012**
(21) Application number: 12250037.4
(22) Date of filing: 21.02.2012
(51) Int. Cl.: F16B 7/04, F16B 7/10, F16B 7/14

(54) **Pole assembly**

(30) Priority: 23.02.2011 GB 201103107
(71) Applicant: Gardiner Pole Systems Ltd, St. Austell Cornwall PL25 5JN (GB)
(72) Inventor: Gardiner, Alexander, St. Austell Cornwall PL25 5JN (GB)
(74) Representative: Akers, Noel James

(57) **Abstract**

A pole assembly (100) is provided, the pole assembly (100) comprising a first tubular pole (102) and a second tubular pole (112), the first pole (102) comprising a central longitudinally extending portion (104) having a first wall thickness and a longitudinally extending coupling portion (106) adjacent the central portion (104), the coupling portion (106) having a second wall thickness, the second wall thickness being greater than the first wall thickness, the first and second poles capable of being coupled in an end to end configuration with an end portion of one of the first and second poles extending within the other of the first and second poles, the coupling portion of the first pole overlapping the second pole, whereby a coupling between the poles may be formed by applying a radially compressive force around the coupling portion of the first pole.

## Description

The present invention relates to a pole assembly, including more especially a telescopic pole assembly.

Pole assemblies comprising a plurality of individual poles attached or connected end to end are known in the art. In general, known pole assemblies may be divided into two categories: telescopic pole assemblies; and modular pole assemblies.

Telescopic pole assemblies are known in the art. A telescopic pole assembly typically comprises a plurality of poles that may be moved between an extended position and a retracted position. The poles are provided with a range of different nominal diameters. The diameters of the poles are selected such that a given pole may extend partially or wholly within one or more poles of a larger nominal diameter and/or have one or more poles of a smaller nominal diameter extend partially or wholly there within. In this way, the plurality of poles may be arranged to move between the retracted and extended positions in a telescopic manner. Typically, telescopic pole assemblies further comprise means for securing the poles in an extended position, for example using one or more clamps or other means to lock adjacent poles in the extended and/or retracted positions. In use, one or more poles of the assembly are moved from the retracted to an extended position, in order to provide a pole assembly of the desired or required length.

Telescopic pole assemblies offer the advantage of ease of storage, transportation and use. However, they are generally heavy and flexible.

Modular pole assemblies, similar to telescopic pole assemblies, comprise a plurality of individual poles. However, unlike telescopic pole assemblies, the poles are not nested and extendable in a telescopic manner. Rather, the pole assembly is constructed by connecting individual poles in an end to end configuration. A plurality of poles are connected in this manner until the pole assembly is of the required length. The assembly may comprise means for securing adjacent poles together, such as clamps, screw-fitting connections, push-fitting connections and other locking devices.

The poles making up the pole assembly may be similar or identical in cross-section and length, providing a pole assembly having a substantially constant cross-sectional size along its length. This system allows the poles to manufactured to a single size and style. The poles may be connected at any position in the pole assembly, providing ease of assembly and use. The assembly may be easily increased in length by adding further poles. However, known systems of this type are generally heavy and flexible. Such systems are also time consuming and awkward to erect, particularly in confined spaces. The system also occupies significant space when disassembled.

Alternatively, the modular pole assembly may be formed from a plurality of tapered poles, which provide, when interconnected, a pole assembly that generally tapers from one end to the other. The tapered modular systems are generally lighter in weight, allowing the pole assembly to be of greater length. However, the system presents many of the disadvantages of the modular poles assemblies. In addition, depending upon the manner in which the poles are connected, it can be difficult to separate two tapered poles.

BE 1011106 discloses a pole assembly comprising a plurality of interconnected individual hollow poles. The poles are connected end to end by means of a connection system comprising a male and a female part. The male part comprises a helical form on the exterior of an end portion of one pole. The female part comprises a corresponding helical form formed on the interior surface of one end portion of a second pole. In use, a pole assembly is constructed by coupling the poles end to end, the female part of one end portion of the second pole receiving the male part of one end portion the first pole, the coupling being achieved by relative rotation of the two poles to engage the two helical forms.

FR 1,013,803 relates to a tubular assembly comprising a plurality of nested tubes arranged to move telescopically relative to one another. A first tube is provided with its end portion of reduced outer and inner diameter relative to the nominal tube diameter. A second tube is provided with its portion of increased inner and outer diameter relative to the nominal tube diameter, the second tube extending and moveable within the first tube. A spring-loaded latching mechanism is provided within the first tube to engage with a hole in the wall of the second tube, when the first and second tubes are in an extended position.

GB 1,512,912 concerns a telescopic variable length device comprising a plurality of nested tubes arranged to move telescopically with respect to each other. The device comprises an adjustment spindle. Each tube is provided with a nut for engaging with a threaded portion of the adjustment spindle. Rotation of the adjustment spindle allows the tubes to move telescopically with respect to one another and thus extend the device.

GB 2, 365, 42 discloses a joint fitting for thin walled tubes for the purpose of joining a thin walled tube either to another similar tube or to some other structural part. The joint comprises deformable outer and inner members which fit respectively into and over the tube, and between which members the tube is or the tube parts are squeezed in such a manner that the tube wall is contracted into binding engagement with complementary grooved and projecting portions of said members.

US 4, 911, 484 relates to a clamping ring for establishing a connection for metallic pipes that have interengaging pipe ends. In particular, the tubular metallic clamping ring may be pressed axially onto the outwardly disposed pipe end to produce a radial compression of the pipe ends when they are placed together.

There is a need for an improved pole assembly that allows a plurality of poles to be interconnected in an end to end configuration. It would be advantageous if the pole assembly may be formed of a light weight material and be easy to erect and use, preferably by hand.

It has been found that an improved pole assembly may be provided by providing individual tubular poles that are coupled at the end portions in an end to end configuration. The poles are provided with a central portion having a first wall thickness. The end portions of the poles to be interconnected are provided with a region of increased wall thickness, such that the coupling between the end portions of two poles is provided at the region of increased wall thickness of each pole. In this way, the majority of the length of the pole may be formed with a wall thickness sufficient to provide the required strength and rigidity of the pole, while allowing the wall thickness to be thinner than required to form an effective coupling between adjacent poles. Rather, the region of increased wall thickness, sufficient to withstand the forces exerted on the poles to form and maintain a rigid coupling, is limited to the end portions of the poles to be interconnected. Such a pole assembly may be formed having a significantly lower weight than known pole assemblies, while providing improved strength and rigidity.

According to the present invention there is provided a pole assembly, the pole assembly comprising a first tubular pole and a second tubular pole, the first pole comprising a central longitudinally extending portion having a first wall thickness and a longitudinally extending coupling portion adjacent the central portion, the coupling portion having a second wall thickness, the second wall thickness being greater than the first wall thickness, the first and second poles capable of being coupled in an end to end configuration with an end portion of one of the first and second poles extending within the other of the first and second poles, the coupling portion of the first pole overlapping the second pole, whereby a coupling between the poles may be formed by applying a radially compressive force around the coupling portion of the first pole.

In a further aspect, the present invention comprises a pole for use with other poles in forming a pole assembly, the pole comprising a central longitudinally extending portion having a first wall thickness and a longitudinally extending coupling portion adjacent the central portion, the coupling portion having a second wall thickness, the second wall thickness being greater than the first wall thickness, the pole capable of being coupled to another pole in an end to end configuration with an end portion of one of the poles extending within the other of the poles, the coupling portion of the pole overlapping the other pole, whereby a coupling between the poles may be formed by applying a radially compressive force around the coupling portion of the first pole.

The pole assembly of the present invention comprises a first tubular pole having a specific arrangement of portions with a specific distribution of wall thicknesses. In particular, the first pole comprises a central portion extending longitudinally along the pole and having a first wall thickness. The first pole further comprises an end portion adjacent the central portion and disposed at one end of the pole. The end portion comprises a coupling portion extending longitudinally along the pole and having a second wall thickness. The second wall thickness is greater than the first. The pole assembly further comprises a second pole.

The poles may have any suitable generally tubular form and cross-section. Preferably the first and second poles have the same form and cross-section. A generally circular cross-section is particularly preferred. However, other cross-sectional forms, such as polygonal cross-sections, may also be envisaged.

The first and second poles may be formed from any suitable materials and such materials are known in the art. The materials of construction of the first and second poles may be different. However, preferably the first and second poles are formed from the same materials. The poles are preferably formed from a lightweight material, allowing the poles and pole assembly to be hand held and manipulated by hand. Suitable materials include metals, including aluminium and aluminium alloys, polymers, including fibre-reinforced polymers, in particular polymers reinforced with carbon fibres. The techniques for forming tubular poles from such materials are known and will be understood by persons skilled in the art. Such techniques include forming the generally tubular poles around a mandrel.

The first and second poles may have any suitable length and diameter, determined for example by the duties to be performed by the pole assembly and the materials of construction. The length of the first and second poles may be the same or different. Typically, the poles have a length of at least 1 metre, more typically at least 2 metres, still more typically at least 3 metres. Pole lengths of up to 10 metres or more are also envisaged, more preferably up to 7 metres. To allow for easier handling of the poles, it is preferred that the length of individual poles is up to 5 metres, with a pole length of about 2 to 4 metres being especially preferred.

The length of the pole assembly is determined by the number of individual poles and by the length of such poles. The pole assembly may have a total length of 10 metres or more, with lengths of up to 15 or 20 metres or longer being achievable with the present invention.

The nominal diameter of the poles is typically at least 2 cm, more typically at least 3 cm, preferably at least 5 cm. Pole diameters of from 10 cm, up to 20 cm and greater may also be envisaged. The diameters of the first and second poles will differ, allowing at least the end portion of one pole to extend within the end portion of the other pole.

In one embodiment, the diameters of the first and second poles are selected such that they may be nested, that is one pole may be arranged to extend substantially or wholly within the other pole. This provides a compact arrangement for the storage and transport of the pole assembly.

The first pole comprises a central portion. In this respect, references to 'central' are to the centre of the pole in a longitudinal direction. The central portion typically comprises the majority of the length of the pole, for example at least 50% of the length of the pole, more preferably at least 60%, still more preferably at least 70% of the pole. In preferred embodiments, the central portion will comprise at least 80% of the length of the pole, more preferably at least 90% of the length of the pole.

The central portion has a first wall thickness. The wall thickness of the central portion is preferably uniform along the length of the central portion and is preferably uniform circumferentially around the pole. The first wall thickness is required to provide the pole with the properties necessary to perform the function of the pole, that is provide such properties as the required axial strength of the pole, the required radial strength, the required resilience of the pole, and the like. In particular, the first wall thickness is required to provide the pole with resistance to the axial stresses and bending moments to be encountered by the pole when in use.

The first wall thickness will depend upon such factors as the material of construction of the pole and the use to be made of the pole. For example, in the case of a pole formed from carbon-fibre reinforced polymer, the wall thickness of the central portion may be in the range upwards from 0.3 mm, more preferably 0.5 mm, still more preferably from 0.75 mm. A wall thickness in the range of from 1.0 to 1.5 mm is particularly suitable for the central section of such a pole.

The first pole is further provided with a longitudinally extending coupling portion. The coupling portion is provided to allow the pole to be connected, in particular releasably connected, to the second pole in the pole assembly as described in more detail hereinafter. The coupling portion is provided in the pole adjacent the central portion. The coupling portion is preferably disposed in an end portion of the pole. The coupling portion may be spaced from the end of the pole. More preferably, the coupling portion extends from the end of the pole.

The coupling portion has a second wall thickness. The wall thickness of the coupling portion is preferably uniform along the length of the coupling portion and is preferably uniform circumferentially around the pole. The second wall thickness is greater than the first wall thickness. The function of the coupling portion is to allow adjacent poles in the assembled pole assembly to be connected together. The second wall thickness is required to provide the coupling portion with the strength required to form the connection. In particular, the second wall thickness is required to provide the connection between the adjacent poles with sufficient strength, especially to resist axial and bending forces at the connection.

Further, the first and second poles of the assembly, when in use, are connected by having an end portion of one of the poles extending within the other of the poles. The connection between the poles is formed by means of a compression joint. Such joints can be formed, for example, by threaded fittings or by clamp fittings. To ensure a sufficiently strong connection is formed between adjacent poles in the assembly, the compression joints are required to apply a significant compressive force on one or both poles. The coupling portion is thus required to a have a wall thickness sufficient to resist these significant compressive forces. For example, in one embodiment, the outer of the first and second poles is provided with a clamp for forming the coupling between the first and second poles. The clamp may be bonded to the end portion of the outer of the poles. In this arrangement, the clamp applies a compression or clamping force on the coupling portion of the inner pole. The coupling portion of the inner pole must therefore be of a sufficient thickness to withstand the compressive forces applied by the clamp.

The second wall thickness is greater than that of the first wall thickness. The second wall thickness will depend upon such factors as the material of construction of the pole and the use to be made of the pole assembly. For example, in the case of a pole formed from carbon-fibre reinforced polymer, the wall thickness of the coupling portion may be in the range upwards from 0.5 mm, more preferably 0.75 mm, still more preferably from 1.0 mm. A wall thickness in the range of from 1.2 to 2.0 mm is particularly suitable for the coupling section of such a pole.

The ratio of the first wall thickness to the second wall thickness may be in the range of from 1:1.1 to 1:3, depending upon the materials of construction of the poles, the intended use and the like. More preferably, the ratio of the first wall thickness to the second wall thickness is from 1:1.2 to 1:2, still more preferably from 1:1.3 to 1:1.8.

In one embodiment, the pole assembly of the present invention is provided with one or more first poles formed from carbon-fibre reinforced polymer having a first wall thickness of 0.9 mm and a second wall thickness of 1.35 mm, that is providing a ratio of the first wall thickness to the second wall thickness of 1:1.5.

The coupling portion may have the same outer diameter as the central portion of the first pole. More preferably, for ease of manufacture and use of the first pole, the coupling portion as the same inner diameter as the central portion, with the coupling portion appearing as a region of increased outer diameter in the length of the pole.

The first pole is connected to a second pole by having an end portion of one of the first or second poles extending within the other of the first or second poles, such that the coupling portion of the first pole overlaps with the second pole. The poles are connected by applying a radially compressive force to one or both poles in the region of the overlap between the coupling portion of the first pole and the second pole, as described hereinbefore. Suitable connection means for applying a radially compressive force to the overlap of the two poles are known in the art and include clamps, such as overcentering clamps, and threaded connectors.

In one embodiment, the first pole is provided with a connection means operable to apply a radially compressive force to the coupling portion of the first pole. In particular, the first pole may be provided with such a connection means on its exterior.

The first pole may comprise a single coupling portion, allowing it to be connected to a single second pole as hereinbefore described. In one preferred embodiment, the first pole is provided with a coupling portion at each end of the central section, allowing the first pole to be coupled to a plurality of second poles, in like manner. Preferably, the first pole is provided with a coupling portion extending from each end of the pole.

The pole assembly comprises a second pole. The second pole may be formed with a uniform wall thickness throughout its length. The wall thickness will typically be as described hereinbefore for the wall thickness of the coupling portion. In this case, it is preferred that the inner and outer diameters of the first and second poles are selected such that the first pole can extend within the second pole. However, the opposite arrangement may also be employed.

In one embodiment, the second pole is of the same general form as the first pole, as hereinbefore described, that is has a central portion and one or more coupling portions as described above. In this case, the connection between the first and second poles is formed by having the end portion of one pole extend within the other pole such that a coupling portion of the first pole overlaps a coupling portion of the second pole. A connection is made between the poles by applying a radially compressive force to the overlap between the coupling portions, as described hereinbefore.

As noted, the first and second poles of the pole assembly are required to be connected in a telescopic manner, that is the end portion of one pole extending within the other pole. One or both poles may be provided with means to limit the longitudinal movement of one pole relative the other. Such means include providing the poles with cooperating ridges, rings or flanges. Preferably, such means limit the movement of one pole within the other such that, at the limit of the relative movement, the poles are aligned to allow them to be connected together. In particular, in the appropriate embodiments, the poles are preferably aligned at the limit of movement to have the coupling portions of the first and second poles overlapping.

The first and second poles may be provided with one or more indicators to indicate the relative positions of the two poles. For example, such indicators may provide one or more marks, such as coloured bands, on the outer surface of one or both poles. The indicators are provided to indicate to the user when the adjacent poles are properly aligned longitudinally. For example, in the case of nested tubes, the inner tube may be provided with a mark on one end portion such that, as the inner tube is extended from within the outer tube, the mark becomes visible when the inner tube is located in the correct position for safe and proper connection. In this way, overextension of the inner tube, possibly leading to a weaker connection, is avoided.

In a further embodiment, the pole assembly comprises a first pole as hereinbefore described, a second pole having the same general features of the first pole as described, and a third pole. The third pole may have a uniform wall thickness along its length, as described above. Alternatively, the third pole may also have the general features of the first pole as hereinbefore described. That is, the pole assembly may comprise or consist of a plurality of first poles. The first, second and third poles are connected in the manner described above by means of compression joints. It is particularly preferred that the first, second and third poles are sized to be able to be nested.

In one embodiment of the present invention, the pole assembly comprises a plurality of first poles, as hereinbefore described. The pole assembly comprises one or more second poles having a uniform thickness along its length, in particular a uniform second thickness, as described above, allowing a compression coupling to be applied to the second pole at any position along its length. In this way, the overall length of the pole assembly may be fully adjustable.

Further, the pole assembly may comprise one or more further poles that are engageable with one or more of the other poles of the pole assembly in an end-to-end arrangement using a push-fit connection as known in the art. Such a push-fit connection is formed by providing the end portion of one pole with a reduced outer diameter and/or providing the end portion of the other pole with an increased inner diameter, such that the end portion of the one pole is inserted a set distance into the end portion of the other pole. The wall thickness of both poles is generally substantially uniform along the length of the pole. Such push-fit connections are known in the art and commonly applied. In this way, the overall length of the pole assembly when extended or assembled may be increased in specific increments of the length of each further pole added to the assembly by the push-fit connection.

The poles of the pole assembly may have the same or different lengths. Preferably, the poles are substantially the same in length, allowing them to be nested, one within the other, to provide a compact arrangement for storage and transport.

Pole assemblies of the present invention find many uses, including for example for cleaning, such as the cleaning of windows and other exterior parts of buildings, as supports, such as supporting still or video cameras, as part of net enclosures, such as for the capture of insects and animals, and as temporary or permanent aerial installations.

The length of the pole assembly may be altered by increasing or decreasing the number of poles that are connected in the end to end arrangement. Accordingly, the present invention, in a still further aspect, also provides a pole assembly kit comprising a plurality of poles for connecting in an end to end arrangement, at least one of the plurality of poles being a first pole as hereinbefore described.

The pole assemblies of the present invention are particularly advantageous in that they may be very lightweight. This in turn makes them easier to use by hand or, alternatively, allows a longer pole assembly to be formed for a given weight than existing arrangements. In particular, in the case of poles formed from carbon-fibre reinforced polymers, it has been found possible to form a pole assembly of interconnected first, second and third poles approximately 10 metres in length and having a weight as low as 0.11g per mm. In the case of a similar pole assembly with a length of about 15 metres, the weight is as low as 0.166 g per mm. Such lightweight pole assemblies are particularly advantageous for the aforementioned uses.

As noted above, the pole assembly comprises a second pole, which may be of a uniform wall thickness along its length. In one preferred embodiment, the pole assembly comprises two or more such second poles. The wall thickness of the or each second poles is preferably a second wall thickness. In this way, the second poles may be connected to each other and fixed by means of a compression joint at any position along the length of the second poles. This has the advantage of providing the pole assembly with a high degree of adjustability in its overall length when partially extended.

Embodiments of the present invention will now be described, by way of example only, having reference to the accompanying drawings, in which:
Figure 1 is a cross-sectional view of a pole according to one embodiment of the present invention;
Figure 2 is a cross-sectional view of two poles connected in an end to end arrangement to form an assembly according to the present invention;
Figure 3 is a cross-sectional view of a pole assembly according to a further embodiment of the present invention; and
Figure 4 is a cross-sectional view of a pole assembly according to a further embodiment of the present invention.

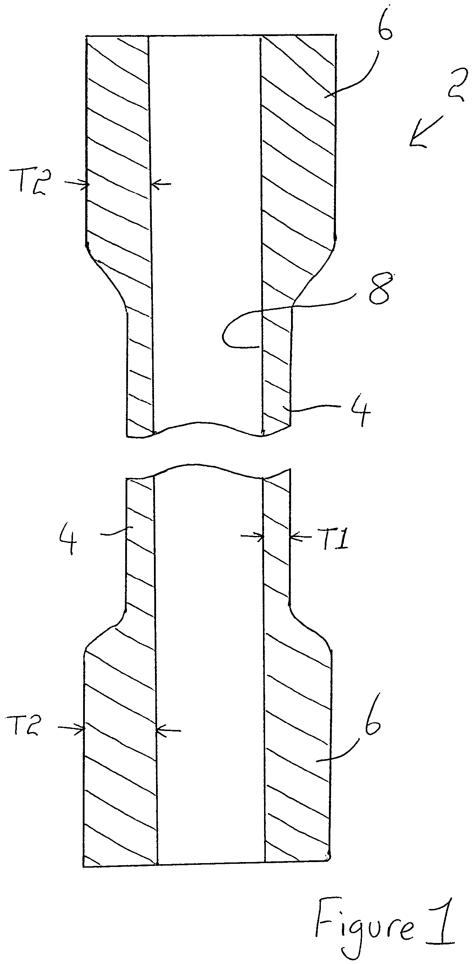

Turning to Figure 1, there is shown a pole according to one embodiment of the present invention and generally indicated as 2. The pole 2 is generally tubular and formed from carbon-fibre reinforced polymer, in known manner.

The pole 2 comprises a central portion 4 having a first wall thickness T1, as indicated in Figure 1. The central portion 4 of the pole 2 may be of any suitable length and comprises the major portion of the total length of the pole 2. Poles of the general configuration shown in Figure 1 may be formed with different lengths by adjusting the length of the central portion 4, as required for the duties to be performed.

The pole 2 is further provided with a coupling portion 6 disposed at each end of the tube. The coupling portion 6 may be spaced from the respective end of the pole. However, in the embodiment shown in Figure 1, each coupling portion 6 is adjacent the central portion 4 and extends from the respective end of the pole. Each coupling portion 6 comprises a longitudinal portion of the pole having and second wall thickness T2.

The second wall thickness T2 of each coupling portion 6 is greater than the first wall thickness T1 of the central portion 4, as shown in Figure 1. In the embodiment shown, T1 is 1.0 mm and T2 is 2.0 mm. The wall thickness T1, T2 may be varied depending upon the material from which the pole is formed and the intended duties to be performed.

As also shown in Figure 1, the pole 2 has a central bore 8 extending longitudinally therethrough. The diameter of the bore 8, that is the inner diameter of the pole 2, is constant along the entire length of the pole. In particular the inner diameter of the central portion is the same as the inner diameter of each coupling portion. It follows that the outer diameter of each coupling portion is greater than the outer diameter of the central portion, as shown.

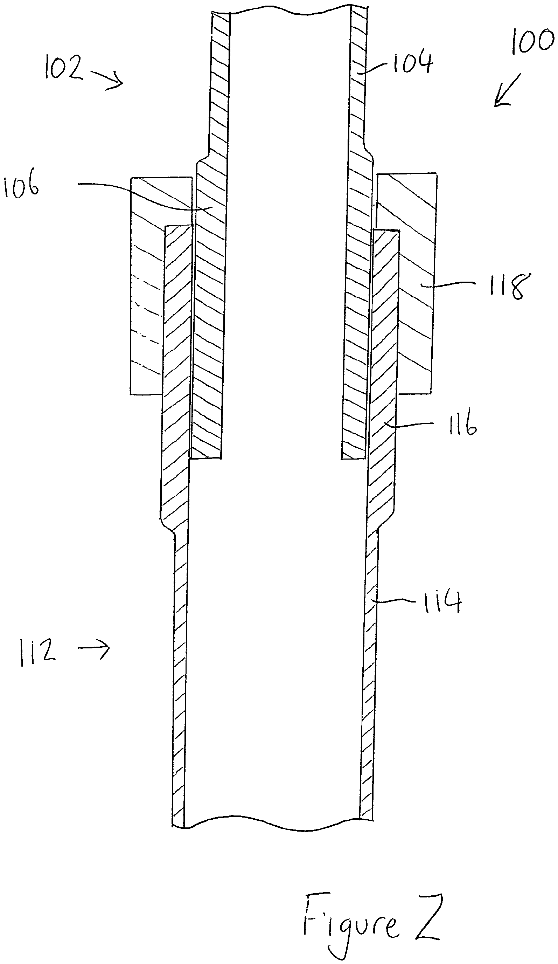

The coupling portions 6 of the pole 2 of Figure 1 are used to connected the pole to a second pole to form a pole assembly, as shown in Figure 2.

Referring to Figure 2, the pole assembly, generally indicated as 100, comprises a first pole 102 having a central portion 104 and a coupling portion 106 disposed at one end thereof. The central portion 104 and the coupling portion 106 of the first pole 102 have the configuration and relative dimensions of those of the pole shown in Figure 1 and discussed hereinbefore. Further, the pole assembly 100 comprises a second pole 112 having a central portion 114 and a coupling portion 116 disposed at one end thereof. The central portion 114 and the coupling portion 116 of the second pole 112 have the configuration and relative dimensions of those of the pole shown in Figure 1 and discussed hereinbefore. The first and second poles 102, 112, have relative inner and outer dimensions such that they may be arranged telescopically, as shown in Figure 2, that is the coupling portion 106 of the first pole 102 extends longitudinally within the coupling portion 116 of the second pole 112. As shown in Figure 2, the coupling portions 104, 114 of the first and second poles 102, 112 overlap.

The second pole 112 is provided with an overcentering clamp 118 attached, for example by being bonded, to the outer surface of the coupling portion 116. Operation of the clamp 118 applies a radially compressive force to the coupling portion 106 of the first pole, thus fastening the poles together. Assemblies comprising such clamps for connecting poles in this end to end arrangement and their construction are known in the art. Alternatives to the clamp include a collar assembly, such as a threaded collar device.

The wall thickness of the central portion 104, 114 of each pole 102, 112 is selected to ensure the pole has sufficient strength to perform the intended duties. The wall thickness of the coupling portions 106, 116 of each pole 102, 112 is selected to provide sufficient strength to the coupling portion of each portion to resist the radial compressive forces applied to the poles by the collar or other connection means and prevent the walls of one or both of the poles from collapsing.

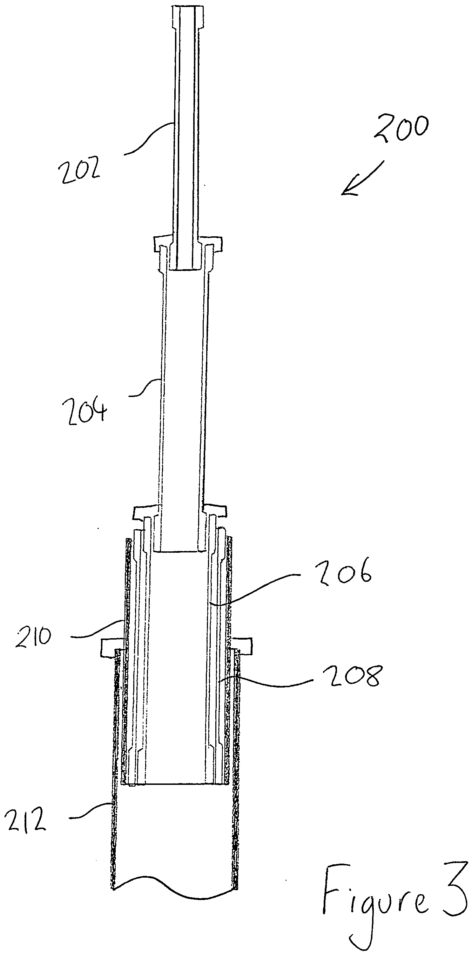

Turning to Figure 3, there is shown a nested arrangement of a plurality of poles forming a pole assembly, generally indicated as 200. The pole assembly 200 comprises a plurality of poles adapted to fit in a nested arrangement as shown, that is, the poles are provided in a range of diameters, allowing a pole of a smaller diameter to extend within one or more poles of a larger diameter. This in turn allows the poles to be extended in a telescopic arrangement.

In particular, the pole assembly 200 of Figure 3 comprises four poles 202, 204, 206 and 208 having the general configuration of the pole shown in Figure 1 and described above. A first pole 202, having the smallest nominal diameter is shown in an extended position, with its coupling portion extending within and overlapping a coupling portion of the second pole 204. The first pole 202 is fixed relative to the second pole 204 by a collar, in the manner shown in Figure 2 and described hereinbefore. The second pole 204 is shown in a similar extended position and fixed relative to the third pole 206 in like manner. The third pole 206 is nested within the fourth pole 208 in a retracted position.

The pole assembly is provided with two further poles, 210 and 212, of relatively larger diameter. The poles 210 and 212 are nested and contain the four poles 202 to 208 therewithin. The poles 210 and 212 are formed with a uniform wall thickness and substantially uniform inner and outer diameters. The wall thickness of the poles 210 and 212 is the thickness T2 of the coupling portion of the pole of Figure 1. The pole 210 is shown partially extended from the outermost pole 212 and fixed relative to the outermost pole by a collar, again in the generally manner described above. By providing the pole assembly with poles 210, 212 with a uniform wall thickness T2, they may be clamped together at any point along their lengths. This provides the overall assembly 200 is a finer degree of adjustment in its length when partially extended.

The number of poles in the pole assembly 200 may be varied, as required for the duties to be performed. In particular, the number of poles 202 to 208 of the first arrangement may be varied. As these poles are used in the assembly in either the fully retracted, or nested position as shown for poles 206 and 208, or in the fully extended position, as shown for poles 202 and 204, they may be used to increase or decrease the length of the pole assembly by whole numbers of their length. Further, the number of poles 210 and 212 of the second arrangement may be varied. As noted, these poles may be fixed in any position between fully extended and fully retracted, or nested, to provide flexibility in the overall length of the pole assembly.

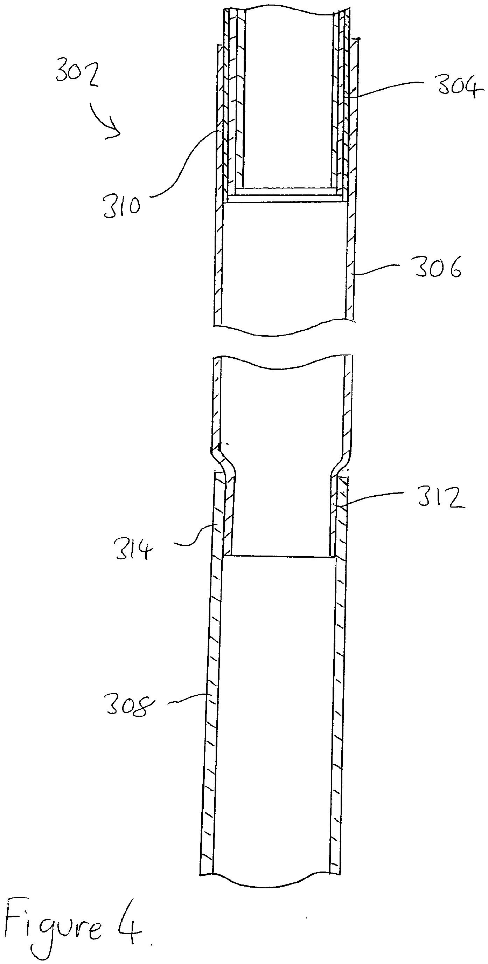

Turning to Figure 4, there is shown a further alternative embodiment of the pole assembly of this invention, generally indicated as 302. The pole assembly 302 comprises a nested pole assembly 304 of the general arrangement shown in Figure 3 and described above. There are further provided two poles 306 and 308, each having a substantially uniform wall thickness. The pole 306 has an inner diameter sized to accept the outermost pole of the nested pole assembly 304, in particular to provide an interference fit between the end portion of the outermost pole and one end portion 310 of the pole 306. The pole 306 further comprises a second end portion 312 having a reduced outer diameter, such that it can extend within an end portion 314 of the pole 308. Such a push-fit connection is known in the art.

In this way, further poles of the general arrangement of the poles 306 and 308 may be added to the proximal end of the pole assembly 302, thereby allowing the user to easily increase the overall length of the assembly by increments of a complete length of one pole 306, 308.

## Claims

1. A pole for use with other poles in forming a pole assembly, the pole comprising a central longitudinally extending portion having a first wall thickness and a longitudinally extending coupling portion adjacent the central portion, the coupling portion having a second wall thickness, the second wall thickness being greater than the first wall thickness, the pole capable of being coupled to another pole in an end to end configuration with an end portion of one of the poles extending within the other of the poles, the coupling portion of the pole overlapping the other pole, whereby a coupling between the poles may be formed by applying a radially compressive force around the coupling portion of the first pole.

2. The pole according to claim 1, wherein the pole is formed from a fibre-reinforced polymer, preferably wherein the polymer is reinforced with carbon fibres.

3. The pole according to claim 1 or 2, wherein the central portion of the pole comprises at least 50% of the length of the first pole, preferably wherein the central portion of the pole comprises at least 70% of the length of the pole.

4. The pole according to any of claims 1 to 3, wherein the wall thickness of the central portion of the pole is uniform along the length of the central portion and/or is uniform circumferentially around the pole.

5. The pole according to any of claims 1 to 4, wherein the first wall thickness is at least 0.3 mm.

6. The pole according to any of claims 1 to 5, wherein the coupling portion is disposed in an end portion of the pole, preferably wherein the coupling portion extends from an end of the pole.

7. The pole according to any of claims 1 to 6, wherein the wall thickness of the coupling portion of the pole is uniform along the length of the coupling portion and/or is uniform circumferentially around the pole.

8. The pole according to any of claims 1 to 7, wherein the second wall thickness is at least 0.5 mm.

9. The pole according to any of claims 1 to 8, wherein the ratio of the first wall thickness to the second wall thickness is in the range of from 1:1.1 to 1:3.

10. The pole according to any of claims 1 to 9, wherein the coupling portion has the same inner diameter as the central portion.

11. The pole according to any of claims 1 to 10, wherein the pole is provided with a coupling portion adjacent each end of the central portion, preferably wherein the pole is provided with a coupling portion extending from each end of the pole.

12. A pole assembly, the pole assembly comprising a first tubular pole and a second tubular pole, the first pole according to any preceding claim, the first and second poles capable of being coupled in an end to end configuration with an end portion of one of the first and second poles extending within the other of the first and second poles, the coupling portion of the first pole overlapping the second pole, whereby a coupling between the poles may be formed by applying a radially compressive force around the coupling portion of the first pole.

13. The pole assembly according to claim 12, wherein the diameter of the first and second poles is selected such that they can be nested, preferably wherein the first pole extends within the second pole.

14. The pole assembly according to claim 12 or 13, wherein one or both of the first and second poles is provided with means to limit the longitudinal movement of one pole relative to the other.

15. The pole assembly according any of claims 12 to 14, wherein one or both of the first and second poles is provided with an indicator to indicate the relative position of the two poles.
